(19) Europäisches Patentamt
European Patent Office
Office européen des brevets

(11) Veröffentlichungsnummer: **0 002 683**
**B1**

(12) # EUROPÄISCHE PATENTSCHRIFT

(45) Veröffentlichungstag der Patentschrift: **28.07.82**

(21) Anmeldenummer: **78101553.2**

(22) Anmeldetag: **04.12.78**

(51) Int. Cl.³: **C 09 B 67/00**, C 09 C 3/08, C 09 C 1/36, C 09 C 1/24, C 07 C 43/04

(54) **Verwendung von Beta-Hydroxyalkyläthern zum Behandeln von Pigmenten und Füllstoffen.**

(30) Priorität: **08.12.77 DE 2754576**

(43) Veröffentlichungstag der Anmeldung:
**11.07.79 Patentblatt 79/14**

(45) Bekanntmachung des Hinweises auf die Patenterteilung:
**28.07.82 Patentblatt 82/30**

(84) Benannte Vertragsstaaten:
**BE FR GB NL**

(56) Entgegenhaltungen:
**FR - A - 1 170 719**
**FR - A - 1 322 307**
**FR - A - 1 548 195**
**FR - A - 2 013 415**
**GB - A - 1 115 334**
**US - A - 3 004 858**

Die Akte enthält technische Angaben die nach dem Eingang der Anmeldung eingereicht wurden und die nicht in dieser Patentschrift enthalten sind.

(73) Patentinhaber: **Henkel Kommanditgesellschaft auf Aktien**
**Postfach 1100 Henkelstrasse 67**
**D-4000 Düsseldorf 1 (DE)**

(72) Erfinder: **Linden, Heinrich**
**Am Falder 75**
**D-4000 Düsseldorf-Holthausen (DE)**
Erfinder: **Heidrich, Jochen, Dr.**
**Urdenbacher Allee 57**
**D-4000 Düsseldorf-Benrath (DE)**
Erfinder: **Wegemund, Bernd, Dr.**
**Händelweg 3**
**D-5657 Haan (DE)**
Erfinder: **Bornmann, Hans**
**Am Falder 22**
**D-4000 Düsseldorf-Holthausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 683 B1

# Verwendung von $\beta$-Hydroxyalkyläthern zum Behandeln von Pigmenten und Füllstoffen

Bei der Herstellung von pigmentierten Anstrich- und Überzugsmitteln müssen die Pigmente und Füllstoffe in organischen oder wässrigen Medien dispergiert werden, d.h. die aus dem Pigmentprimärkorn gebildeten Agglomerate müssen zerstört werden. Die organischen Pigmente und Füllstoffe werden mittels verschiedener Maschinen wie Kneter, Walzenstuhl oder Kugelmühle mechanisch dispergiert. Wegen des dabei notwendigen Aufwandes an Zeit und Energie stellt die Dispergierung einen beachtlichen Kostenfaktor dar. Um diesen Arbeitsgang kürzer zu gestalten, werden die Pigmente und Füllstoffe mit organischen Verbindungen behandelt, die die Grenzflächenspannung zwischen dem Feststoffkorn und dem organischen oder wässrigen Medium herabsetzen und so die Dispergierung erleichtern sollen. Dabei soll sich die Wirkung der organischen Verbindungen nach Möglichkeit auf eine verbesserte Dispergierung ohne negative Nebenerscheinungen beschränken.

Aus der US—PS 1 722 177 ist es bereits bekannt, anorganische Pigmente und Füllstoffe mit Stearinsäure oder Harzsäuren und deren Ammoniumseifen zu behandeln, um deren Dispergierfähigkeit zu verbessern. Aus der FR—PS 1 276 739 ist es bekannt, Triäthanolamin und seine Salze für den gleichen Zweck einzusetzen. Weiterhin wurdem bereits aliphatische Amine als Mittel zur Verbesserung der Dispergierbarkeit von anorganischen Pigmenten und Füllstoffen vorgeschlagen. Schließlich ist aus der FR—PS 1 548 195 ein Verfahren zur Verbesserung der Dispergierbarkeit und der optischen Eigenschaften von Titandioxid bekannt, bei dem man das Pigment mit Di-, Tri- und Tetraalkylenglykoläthern auf Basis von Äthylenglykol, Propylenglykol, Butylenglykol und Isobutylenglykol behandelt.

Bei der Auswahl der einzusetzenden Dispergierhilfsmittel ist zu bedenken, daß es sich bei vielen Zusatzstoffen um lackfremde Produkte handelt, die neben der gesuchten Dispergierwirkung auch unerwünschte Eigenschaften wie Wasserlöslichkeit und Emulgierkraft besitzen können. Viele von ihnen führen zu störenden Nebenerscheinungen wie Glanzverlust am fertigen Überzug oder zu Trocknungsverzögerungen bei der Ausbildung der Filme.

Es wurde nun gefunden, daß $\beta$-Hydroxyalkyläther der Formel

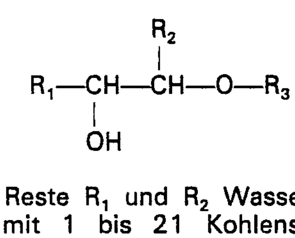

(I)

in der die Reste $R_1$ und $R_2$ Wasserstoff oder Alkylreste mit 1 bis 21 Kohlenstoffatomen bedeuten, wobei mindestens einer dieser Reste ein Alkylrest ist und die Summe der Kohlenstoffatome in $R_1$ und $R_2$ 6 bis 22 beträgt, $R_3$ einen gegebenenfalls mit 1 bis 2 Hydroxylgruppen substituierten und/oder durch 1 bis 2 Ätherbrücken unterbrochenen geradkettigen oder verzweigten Alkylrest mit 1 bis 8 Kohlenstoffatomen darstellt, sowie Umsetzungsprodukte aus Verbindungen der Formel I mit Alkylenoxiden, insbesondere mit Äthylenoxid und/oder Propylenoxid mit Vorteil zum Behandeln von anorganischen und organischen Pigmenten und Füllstoffen verwendet werden können, um deren Dispergierbarkeit in organischen und wässrigen Medien erheblich zu verbessern.

Die Herstellung der erfindungsgemäß einzusetzenden $\beta$-Hydroxyalkyläther geht von Olefinen mit 8 bis 24 Kohlenstoffatomen und endständigen oder statistisch verteilten innenständigen Doppelbindungen aus. Bei den Olefinen mit innenständigen Doppelbindungen kommen vor allem Gemische solcher Verbindungen mit unterschiedlicher Kettenlänge in Betracht.

Olefine mit endständigen Doppelbindungen können beispielsweise durch Kracken von Paraffinkohlenwasserstoffen nach geeigneten Verfahren oder auf aluminochemischen Weg in guten Ausbeuten erhalten werden. Olefine oder Olefingemische mit innenständigen Doppelbindungen sind zum Beispiel über katalytische Dehydrierung oder Chlorierung/Dehydrochlorierung von linearen Paraffinen des genannten Ketenlängenbereichs und nachfolgende selektive Extraktion der Monoolefine mit innenständigen Doppelbindungen zugänglich.

Zur Herstellung der $\beta$-Hydroxyalkyläther der Formel I werden die Olefine zunächst nach an sich bekannten Methoden zum Beispiel mit Peressigsäure epoxydiert. Um zu den $\beta$-Hydroxyalkyläthern der Formel I zu gelangen, werden die erhaltenen Epoxyalkane der Formel

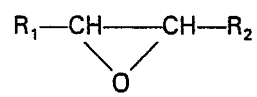

(II)

mit Alkoholen der Formel

$$R_3OH \qquad (III)$$

bei erhöhter Temperatur und zweckmäßigerweise in Gegenwart von sauren oder alkalischen Katalysatoren umgesetzt.

Als Alkohole der Formel $R_3OH$ kommen beispielsweise Methanol, Äthanol, Isopropanol, Hexanol, 2-Äthylhexanol, Äthylenglykol, Propandiol-(1,2), Propandiol-(1,3), Butandiol-(1,3), Hexandiol-(1,6), Glyzerin, Trimethylolpropan, Äthylenglykolmonomethyläther und Diäthylenglykol in Betracht. Für die Umsetzung mit Epoxyalkanen werden diese Alkohole in Mengen von mindestens einem Mol pro Mol

vorhandenen Epoxid eingesetzt. In vielen Fällen hat es sich als vorteilhaft erwiesen, mit einem 1- bis 20 fachen, vorzugsweise 1- bis 8 fachen Alkoholüberschuß zu arbeiten.

Als Katalysatoren für die Umsetzung zwischen Epoxid und Alkohol eignen sich vor allem Borfluoridätherat und Borfluoridacetat, ferner Mineralsäuren wie z.B. Schwefelsäure sowie die Hydroxide und Alkoholate der Alkalimetalle, insbesondere des Natriums. Die Katalysatoren werden dem Reaktionsgemisch in üblichen Mengen von etwa 0,01 bis etwa 5 Gewichtsprozent, bezogen auf das umzusetzende Epoxyalkan, zugegeben.

Die Epoxyalkane können bei Rückflußtemperatur und unter Normaldruck mit den Alkoholen umgesetzt werden. Bei Umsetzungen mit niedersiedenden Alkoholen, insbesondere mit Methanol, kann es zweckmäßig sein, die Reaktion im Autoklaven bei 100 bis 180°C ablaufen zu lassen.

Aus dem resultierenden Reaktionsgemisch wird der überschüssige Alkohol abdestilliert. Die zurückbleibenden Produkte können ohne weitere Reinigung im Sinn der Erfindung verwendet werden.

Die weiterhin erfindungsgemäß einzusetzenden Umsetzungsprodukte aus Verbindungen der Formel I mit Alkylenoxiden werden nach bekannten Methoden durch Anlagerung von Alkylenoxiden in Gegenwart alkalischer Katalysatoren hergestellt. Dabei handelt es sich in erster Linie um die Anlagerung von Äthylenoxid und/oder 1,2-Propylenoxid, vornehmlich jedoch von Äthylenoxid. Der Oxalkylierungsgrad kann in weiten Bereichen schwanken; beim Äthylenoxid beträgt er 2 bis 30, vorzugsweise 5 bis 18 Mol Äthylenoxid je Mol β-Hydroxyalkyläther.

Bei der erfindungsgemäßen Behandlung der anorganischen oder organischen Pigmente und Füllstoffe zur Verbesserung der Dispergierbarkeit in organischen oder wässrigen Medien werden die β-Hydroxyalkyläther der Formel I oder deren Umsetzungsprodukte mit Alkylenoxiden in Mengen von 0,05 bis 5 Gewichtsprozent, vorzugsweise 0,1 bis 1 Gewichtsprozent, bezogen auf das zu beschichtende Pigment oder den zu beschichtenden Füllstoff, eingesetzt.

Als Substrate eignen sich die meisten anorganischen Pigmente und Füllstoffe. Besonders gute Ergebnisse wurden bei der erfindungsgemäßen Behandlung von Titandioxidpigmenten und Eisenoxidpigmenten erzielt. Die Beschichtung mit den erfindungsgemäß zu verwendenden β-Hydroxyalkyläthern und deren Oxalkylierungsprodukten kann sowohl im Rahmen der Pigmentherstellung, beispielsweise beim Vermahlen mittels Kugelmühlen, Stiftmühlen oder Dampfstrahlmühlen in der flüssigen Pigmentsuspension oder durch Behandeln des feuchten Filterkuchens, als auch auf dem bereits fertigen Pitment oder Füllstoff erfolgen. Dabei stört es nicht, wenn die Substrate bereits eine anorganische Nachbehandlung erfahren haben. So können beispielsweise Titandioxidpigmente, auf die Aluminiumoxid und/oder Silicumdioxid aufgefällt wurde, ohne weiteres mit den erfindungsgemäß zu verwendenden Produkten behandelt werden.

Die β-Hydroxyalkyläther der Formel I und ihre Oxalkylierungsprodukte werden bei der erfindungsgemäßen Verwendung direkt als solche, als wässrige Suspensionen, gegebenenfalls unter Mitwirkung geeigneter Tenside, oder auch als Lösung in organischen Lösungsmitteln eingesetzt. Werden zur Herstellung von wässrigen Suspensionen Tenside mitverwendet, so ist besonders darauf zu achten, daß die eingesetzten Tenside keine negativen Auswirkungen auf die Eigenschaften der Anstrichmittel haben, in denen die Pigmente und Füllstoffe verwendet werden sollen.

Werden die erfindungsgemäß zu verwendenden Verbindungen in Form von Suspensionen oder Lösungen eingesetzt, so ist es in den meisten Fällen zweckmäßig, das Wasser oder das Lösungsmittel nach dem innigen Vermischen mit dem Substrat abzudestillieren.

Beispiele

I. Herstellung der erfindungsgemäß zu verwendenden β-Hydroxyalkyläther.

Substanz A

In 320 g (10 Mol) Methanol wurde 1 g Natrium aufgelöst. Nach Zugabe von 132 g (1 Mol) technischem 1,2-Epoxyoctan (15,2 Gew.-% Epoxidsauerstoff) wurde das Gemisch in einem Autoklaven 4 Stunden lang auf 140 bis 180°C erhitzt. Danach wurde das überschüssige Methanol abdestilliert. Der Rückstand wurde mit Wasser gewaschen und getrocknet. Es wurde eine wasserklare Flüssigkeit mit der OH-Zahl 320 erhalten.

Substanz B

64,2 g (0,3 Mol) eines 1,2-Epoxyalkangemisches der Kettenlänge $C_{12}$—$C_{14}$ (7,47 Gew-% Epoxidsauerstoff) wurden mit 30,6 g (0,3 Mol) n-Hexanol und 0,3 g Borfluoridacetat als Katalysator 6 Stunden lang auf 120 bis 150°C erhitzt. Es wurde ein flüssiges, gelbes Reaktionsprodukt mit der OH-Zahl 182 erhalten; der Epoxidgehalt betrug weniger als 0,1 Gew.-%.

Substanz C

64,2 g (0,3 Mol) eines 1,2-Epoxyalkangemisches der Kettenlänge $C_{12}$—$C_{14}$ (7,47 Gew.-% Epoxidsauerstoff) wurden mit 195 g (1,5 Mol) 2-Äthylhexanol und 0,3 g Borfluoridacetat 6 Stunden lang auf 120 bis 130°C erwärmt. Anschließend wurde das überschüssige 2-Äthylhexanol bei 12 Torr abdestilliert. Als Rückstand verblieben 93,1 g helles Öl mit der OH-Zahl 172.

Substanz D

2130 g (10 Mol) eines Epoxyalkange-

misches der Kettenlänge $C_{11}$—$C_{14}$ mit innenständigen, statistisch über die Kohlenstoffkette verteilten Epoxidgruppen (7,5 Gew.-% Epoxidsauerstoff) wurden mit 3100 g (50 Mol) Äthylenglykol und 10 g Borfluoridacetat 6 Stunden lang auf 120 bis 130°C erhitzt. Nach dem Abdestillieren des überschüssigen Äthylenglykols bei 12 Torr verblieb eine wasserklare Flüssigkeit mit der OH-Zahl 410.

Substanz E

285 g (1 Mol) eines 1,2-Epoxyalkangemisches der Kettenlänge $C_{16}$—$C_{18}$ (5,6 Gew.-% Epoxidsauerstoff) wurden mit 310 g (5 Mol) Äthylenglykol und 1 g Borfluoridacetat 6 Stunden lang auf 120 bis 130°C erhitzt. Überschüssiges Äthylenglykol wurde im Wasserstrahlvakuum abdestilliert. Es verblieb ein Reaktionsprodukt mit der OH-Zahl 292.

Substanz F

107 g (0,5 Mol) eines 1,2-Epoxyalkangemisches der Kettenlänge $C_{12}$—$C_{14}$ (7,47 Gew.-% Epoxidsauerstoff) wurden mit 225 g (2,5 Mol) Butandiol-(1,3) und 0,2 g Borfluoridacetat 6 Stunden lang auf 120 bis 130°C erwärmt. Nach dem Abdestillieren des überschüssigen Diols verblieb ein Produkt mit der OH-Zahl 375.

Substanz G

85,2 g (0,4 Mol) eines Epoxyalkangemisches der Kettenlänge $C_{11}$—$C_{14}$ mit innenständigen, statistisch verteilten Epoxidgruppen (7,5 Gew.-% Epoxydsauerstoff) wurden mit 286 g (2 Mol) Hexandiol-(1,6) und 0,2 g Bortrifluoridätherat 6 Stunden lang auf 120 bis 130°C erwärmt. Danach wurde das überschüssige Hexandiol bei 12 Torr abdestilliert. Es verblieb ein flüssiges Produkt mit der OH-Zahl 343.

Substanz H

285 g (1 Mol) eines 1,2-Epoxyalkangemisches der Kettenlänge $C_{16}$—$C_{18}$ (5,6 Gew.-% Epoxidsauerstoff), 402 g (3 Mol) Trimethylolpropan und 1 g Natriummethylat wurden 4 Stunden lang auf 180 bis 200°C erhitzt. Danach wurde das überschüssige Trimethylolpropan bei 1 Torr abdestilliert. Als Rückstand verblieb ein hellgelbes, weiches Harz mit der OH-Zahl 379.

Substanz I

281 g (1 Mol) eines Epoxyalkangemisches der Kettenlänge $C_{15}$—$C_{18}$ mit innenständigen, statistisch über die Kohlenstoffkette verteilten Epoxidgruppen (5,69 Gew.-% Epoxidsauerstoff) wurden mit 530 g (5 Mol) Diäthylenglykol und 1 ml Borfluoriddiätherat unter Rühren 3 Stunden lang auf 80°C erwärmt. Das überschüssige Diäthylenglykol wurde anschließend unter vermindertem Druck abdestilliert. Als Rückstand verblieben 334 g hellgelbe Flüssigkeit mit der OH-Zahl 303.

Substanz J

822 g (3 Mol) Substanz D (OHZ 410; Molgewicht 274) und 0,1 g Natriummethylat (25 gew.%ige Lösung in Methanol) wurden in einen 3 l-Autoklaven aus V4-Stahl mit Rührer gebracht. Der Autoklav wurde geschlossen, mit Stickstoff gespült und auf 70°C erwärmt. Unter Konstanthalten der Temperatur wurden 1320 g (30 Mol) Äthylenoxid aufgedrückt. Anschließend wurde 1 Stunde lang auf 140 bis 180°C erwärmt. Nach dem Abkühlen wurde eine klare, wasserhelle Flüssigkeit mit der OH-Zahl 155 erhalten. Eine 1 gew.-%ige Lösung des Äthylenoxidadduktes in einer 5 gew.-%igen Kochsalzlösung zeigte einen Trübungspunkt von 64°C.

Substanz K

548 g (2 Mol) Substanz D (OHZ 410; Molgewicht 274) wurden in Gegenwart von 0,1 g Natriummethylat in der oben beschriebenen Weise mit 1320 g (30 Mol) Äthylenoxid umgesetzt. Es wurde ein Produkt mit der OH-Zahl 128 erhalten.

II. Anwendungstechnische Prüfung der erfindungsgemäß zu verwendenden $\beta$-Hydroxyalkyläther

Test A

Als zu beschichtendes Pigment wurde ein nach dem Sulfatverfahren hergestelltes, durch Auffällen von Aluminiumoxid nachbehandeltes Titandioxid (Handelsprodukt "Bayertitan R—U—2"; Bayertitan ist ein Warenzeichen) verwendet. Zur organischen Beschichtung wurden die vorstehend beschriebenen Substanzen A bis I eingesetzt.

Die Beschichtung erfolgte mit Lösungen, die 0,2 bis 0,7 g $\beta$-Hydroxyalkyläther in einem Gemisch aus 180 g Leichtbenzin des Siedebereichs 60 bis 95°C und 20 g Äthanol enthielt. Diese Lösungen wurden jeweils mit 100 g Titandioxid 30 Minuten lang intensiv gerührt. Danach wurde das Lösungsmittelgemisch im Wasserstrahlpumpenvakuum abdestilliert, wobei das Pigment zum Schluß auf etwa 80°C erhitzt wurde.

Das auf diese Weise mit 0,2 bis 0,7 Gew.-% $\beta$-Hydroxyalkyläther beschichtete Pigment wurde im Vergleich zum unbeschichteten Pigment wie folgt geprüft:

Als Blindprobe wurden

| | |
|---|---|
| 18,0 g | Titandioxid, ohne organische Beschichtung |
| 24,0 g | lufttrocknendes Alkydharz mit 48 Gew.-% Öl, 55 gew.-%ige Lösung in Xylol/Testbenzin (Handelsprodukt "Alkydal F 48" der Fa. Bayer; Alkydal ist ein Warenzeichen) |
| 10,0 g | Testbenzin |
| 1,4 g | Xylol |

in einer 250 ml-Weithalsflasche, die mit 75 g Glasperlen von 3 mm Durchmesser beschickt

war, 60 Minuten lang mit Hilfe einer Schüttelmaschine ("Paint Conditioner 5100" der Fa. Red Devil, USA) geschüttelt. Anschließend wurde dieser Ansatz mit dem folgenden Gemisch verrührt:

| | | |
|---|---|---|
| 72,0 | g | Alkydharze (wie oben) |
| 2,0 | g | Testbenzin |
| 1,4 | g | Xylol |
| 1,0 | g | Silikonöl (1 Gew.-% in Xylol—Typ AK 35 der fa. Wacker) |
| 1,46 | g | Bleioctoat (24 Gew.-% Pb) |
| 0,46 | g | Cobaltoctoat (6 Gew.-% Co) |
| 0,28 | g | Manganoctoat (6 Gew.-% Mn) |
| 1,4 | g | Methyl-äthylketoxim (55 gew.-%ig in Testbenzin) |
| 80,0 g | | |

Der so erhaltene Lack wurde mit 14,2 g der folgenden ausdispergierten Schwarzpaste versetzt und homogenisiert:

| | | |
|---|---|---|
| 18 | g | Ruß (Flammruß 101, Degussa) |
| 180 | g | Alkydharz (wie oben) |
| 60 | g | Testbenzin |
| 26 | g | Xylol. |

Die abgetönten Lacke wurden mit einem Ziehlineal von 100 $\mu m$ auf Glasplatten aufgezogen. Nach dem Trocknen wurde der Remissionswert bei 420 nm mit einem Farbmessgerät PM Q II der Fa. Carl Zeiss bestimmt.

Bei der Prüfung von Proben des mit den Substanzen A bis I beschichteten Pigmentes wurde ebenso verfahren wie bei der Blindprobe. Anstelle von 18 g Titandioxid wurden jeweils (18,00+0,18 A) g beschichtetes Titandioxid eingesetzt, wobei A den in Spalte 2 der Tabelle I angegebenen Prozentsatz des Beschichtungsmittels, bezogen auf das Pigment, bedeutet. In der Tabelle I sind die ermittelten Remissionswerte wiedergegeben. Ein höherer Remissionswert ist gleichbedeutend mit einem größeren Aufhellvermögen, bedingt durch eine bessere Dispergierung des Weiß-pigments.

TABELLE I
Remissionswerte der Lackproben bei 420 nm

| Substanz | % Beschichtungsmittel | Remission |
|---|---|---|
| Blindprobe | — | 29,2 |
| A | 0,7 | 31,2 |
| B | 0,6 | 30,9 |
| C | 0,5 | 30,9 |
| D | 0,5 | 30,3 |
| E | 0,5 | 31,2 |
| F | 0,7 | 30,7 |
| G | 0,6 | 31,3 |
| H | 0,5 | 30,9 |
| I | 0,2 | 29,6 |
| J | 0,4 | 30,1 |

Test B

Zum Vergleich der Trocknungseigenschaften wurde Titandioxid, wie in Beispiel 1 beschrieben, jeweils mit 1 Gew.-% der folgenden Produkte beschichtet:

a) Substanz A
b) Triäthanolamin (Vergleichssubstanz)
c) N-Sojaalkylpropylendiamin-(1,3) (Vergleichssubstanz)

Die beschichteten Pigmente wurden in einen lufttrocknenden Lack der folgenden Zusammensetzung eingearbeitet:

| | | |
|---|---|---|
| 580 | g | Alkydharz mit einem Gehalt an 65 Gew.-% Baumwollsaatöl; 60 gew.-%ige Lösung in Testbenzin (Handelsprodukt Synthalat CF 61 der Fa. Synthopol Chemie, Buxtehude; Synthalat ist ein Warenzeichen) |
| 116 | g | Testbenzin |
| 290 | g | Titandioxid (unbeschichtet; mit a, b oder c beschichtet) |
| 4 | g | Calciumnaphtenat (4 Gew.-% Ca) |
| 4 | g | Cobaltnaphtenat (4 Gew.-% Co) |
| 4 | g | Bleinaphtenat (4 Gew.-% Pb) |
| 2 | g | Methyläthylketoxim |

Die Prüfung auf das Trocknungsverhalten wurde mit einem Trockenmeßzeitgerät Typ 338 (Fa. Erichsen, Hemer-Sundwig) durchgeführt, das nach folgendem Prinzip arbeitet:

Die zu prüfenden Anstrichstoffe werden mit einem Filmziehgerät (Spaltbreite 200 $\mu m$) unter jeweils gleichen Bedingungen auf Glasplatten (350x25x10 mm) aufgetragen. Die Glasplatten werden nebeneinander in das Gerät eingespannt. Auf jede Probe wird ein Kugelstift aufgesetzt, der unter gleichbleibendem Druck und gleichbleibender Geschwindigkeit im Verlauf von 24 Stunden über eine Strecke von 24 cm geführt wird.

Jeder Kugelstift hinterläßt in dem Anstrichfilm eine charakteristische Spur, die als Maß für den Trocknungsverlauf ausgewertet wird. Die Strecke vom Aufsetzen des Stiftes bis zum Beginn der sichtbaren Spur gibt die Dauer des Antrocknens wieder. Die Strecke vom Aufsetzen des Stiftes bis zum ersten Aufreißen des Films entspricht der Zeit, die bis zum Erreichen des staubtrockenen Zustandes benötigt wird. Die Strecke vom Aufsetzen des Stiftes bis zum Ende der Spur, d.h. bis zu der Stelle, wo der Film nicht mehr aufgerissen wurde, gibt schließlich die für das völlige Durchtrocknen erforderliche Zeitspanne wieder. Bei allen Messungen entspricht 1 cm zurückgelegter Strecke jeweils einer Stunde.

Die Ergebnisse der Vergleichsprüfung sind in der Tabelle 2 wiedergegeben.

TABELLE II
Verlauf der Lacktrocknung in Abhängigkeit von der Pigmentbeschichtung

| $TiO_2$ beschichtet mit | angetrocknet nach | staubtrocken nach | durchgetrocknet nach |
|---|---|---|---|
| Substanz A | 1,0 h | 2,7 h | 12,0 h |
| Triäthanolamin | 1,8 h | 5,4 h | 19,0 h |
| N-Sojaalkyl-propylendiamin-(1,3) | 1,3 h | 3,8 h | 12,2 h |
| ohne Beschichtung | 1,0 h | 2,8 h | 12,4 h |

Nach diesen Ergebnissen wird die Trocknung des Lackfilms durch die erfindungsgemäß zu verwendende Substanz A praktisch nicht verzögert. Bei Verwendung von Triäthanolamin wird das Erreichen des staubtrockenen und des durchgetrockneten Zustandes erheblich verzögert. Wird N-Sojaalkylpropylendiamin-(1,3) zur Pigmentbeschichtung eingesetzt, so wird der staubtrockene Zustand mit erheblicher Verzögerung erreicht.

Test C

Als zu beschichtendes Pigment wurde ein handelsübliches Eisenoxidschwarz (Typ 306 F der Fa. Bayer) verwendet. Die Beschichtung erfolgte in der im Test A angegebenen Weise mit einer 1 gew.-%igen Lösung der Substanz J.

Die Prüfung der Dispergierbarkeit des beschichteten Pigments wurde in folgender Weise durchgeführt:

a) Herstellung der Schwarzpaste

In ein 250 ml-Becherglas (Durchmesser: 6 cm; Höhe: 11 cm) wurden 100 g einer 1 gew.-%igen wässrigen Lösung von Hydroxyäthylcellulose ("Natrasol 250" der Fa. Hercules, Natrasol ist ein Warenzeichen) eingewogen. Danach wurden 60 g beschichtetes oder ungeschichtetes Pigment mit einem Glasstab von Hand eingerührt.

Zur Dispergierung diente ein Rührwerk, das an der Rührwelle eine gestanzte Scheibe von 4 cm Durchmesser besaß. Die Scheibe wurde mit einem Abstand von ca. 1 cm vom Boden des Bechers in die Pigmentpaste zentral eingetaucht. Anschließend wurde 5 Minuten lang mit 1200 UpM gerührt.

b) Herstellung einer Dispersionsfarbe

45 g Wasser
45 g Methylhydroxypropylcellulose, 2 gew.-%ige Lösung in Wasser (Culminal PK 82, Henkel; Culminal ist ein Warenzeichen)
8 g Natriumhexametaphosphat, 10 gew.-%ige Lösung in Wasser
140 g Titandioxid (Typ RN 56, Kronos Titangesellschaft, Leverkusen)
12 g Calcit (Typ BLP 2, Omya, Köln)
18 g Mikrotalkum (Typ AT, extra, Norwegian Talc)
320 g Schwerspat (Typ EOW 423 normal, R. Alberti, Bad Lauterberg)
1 g Konservierungsmittel (Dehygant B, Henkel; Dehygant ist ein Warenzeichen)
12 g Äthylglykolacetat

wurden durch 20 Minuten langes Rühren bei ca. 5000 UpM mittels eines Schnellrührers dispergiert. Anschließend wurden

350 g wässrige Kunstoffdispersion (53 gew.-%ige Dispersion eines Vinylacetat-Copolymeren; Mowilith DM 5, Hoechst; Mowilith ist ein Warenzeichen) und
45 g Methylhydroxypropylcellulose-Lösung (wie oben)
eingerührt.

c) Abtönen

100 g der Dispersionsfarbe b) und 10 g Schwarzpaste a) wurden in einem 250 ml-Kunststoffbecher mit einem Glasstab von Hand innig verrührt.

Die abgemischte Farbe wurde mit einem Ziehkasten von 150 $\mu m$ Spalthöhe und 6 cm Breite auf einer Glasplatte ausgezogen. Nach dem Trocknen der Filme wurde deren Remissionswert mit dem Farbmeßgerät PMQ II (Fa. C. Zeiss) bei 420 nm bestimmt. Die erhaltenen Remissionswerte sind nachfolgend aufgeführt. Ein kleinerer Remissionswert ist dabei gleichbedeutend mit einem größeren Farbvermögen der Schwarzpaste.

Es wurden folgende Remissionswerte erhalten:

| | |
|---|---|
| Beschichtetes Eisenoxidschwarz: | 30,2 |
| Unbeschichtetes Eisenoxidschwarz | 31,1 |

In gleicher Weise wurde die Dispergierbarkeit eines mit 1 Gew.-% der Substanz K beschichteten blaustichigen Eisenoxidrotpigments (Typ 120 F der Fa. Bayer) getestet und folgende Remissionswerte gefunden:

| | |
|---|---|
| Beschichtetes Eisenoxidrot: | 22,1 |
| Unbeschichtetes Eisenoxidrot: | 23,1 |

**Patentansprüche**

1. Verwendung von $\beta$-Hydroxyalkyläthern der Formel

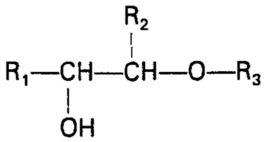 (I)

in der die Reste $R_1$ und $R_2$ Wasserstoff oder Alkylreste mit 1 bis 21 Kohlenstoffatomen bedeuten, wobei mindestens einer dieser Reste ein Alkylrest ist und die Summe der Kohlenstoffatome in $R_1$ und $R_2$ 6 bis 22 beträgt, $R_3$ einen gegebenenfalls mit 1 bis 2 Hydroxylgruppen substituierten und/oder durch 1 bis 2 Ätherbrücken unterbrochenen Alkylrest mit 1 bis 8 Kohlenstoffatomen darstellt, sowie von Umsetzungsprodukten aus Verbindungen der Formel I mit Alkylenoxiden, insbesondere mit Äthylenoxid und/oder Propylenoxid, zum Behandeln anorganischer und organischer Pigmente und Füllstoffe, wobei man die Pigmente und Füllstoffe mit den $\beta$-Hydroxylalkyläthern, die als solche, in Lösung oder in Suspension vorliegen können, in einer Menge von 0,05 bis 5 Gewichtsprozent, vorzugsweise 0,1 bis 1 Gewichtsprozent, bezogen auf das zu behandelnde Substrat, innig vermischt und gegebenenfalls vorhandenes Lösungs- oder Suspendiermittel aus dem Gemisch abdestilliert.

2. Verwendung von Umsetzungsprodukten aus Verbindungen der Formel I mit Alkylenoxiden nach Anspruch 1, dadurch gekennzeichnet, daß es sich um Anlagerungsprodukte von Äthylenoxid mit einem Oxalkylierungsgrad von 2 bis 30, vorzugsweise 5 bis 18 Mol Äthylenoxid je Mol $\beta$-Hydroxyalkyläther handelt.

**Revendications**

1. Utilisation d'éthers $\beta$-hydroxyalcoylés de formule:

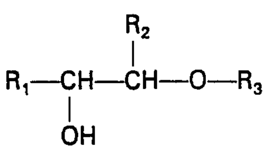 (I)

dans laquelle les radicaux $R_1$ et $R_2$ signifient de l'hydrogène ou des radicaux alcoyle ayant 1 à 21 atomes de carbone, au moins un des ces radicaux étant un radical alcoyl et la somme des atomes de carbone dans $R_1$ et $R_2$ s'élevant à 6—22, $R_3$ représente un radical alcoyle ayant 1 à 8 atomes de carbone éventuellement substitué par 1 à 2 groupes hydroxyle et/ou interrompu par 1 à 2 ponts éther, ainsi que de produits de réaction de composés de formule I avec des oxydes d'alcoylène, en particulier avec de l'oxyde d'éthylène et/ou de l'oxyde de propylène, pour le traitement de pigments et matières de charge minéraux et organiques, en mélangeant intimement les pigments et matières de charge avec les éthers $\beta$-hydroxyalcoylés qui peuvent se présenter tels quels, en solution ou en suspension, en une quantité de 0,05 à 5 % en poids, de préférence de 0,1 à 1 % en poids par rapport au substrat à traiter et en ce qu'éventuellement on enlève par distillation à partir du mélange l'agent de dissolution ou de suspension présent.

2. Utilisation de produits de réaction de composés de formule I avec des oxydes d'alcoylène selon la revendication 1, caractérisée en ce qu'il s'agit de produits d'addition d'oxyde d'éthylène ayant un degré d'oxyalcoylation de 2 à 30, de préférence de 5 à 18 moles d'oxyde d'éthylène par mole d'éther $\beta$-hydroxyalcoylé.

**Claims**

1. The utilization of $\beta$-hydroxyalkyl ethers corresponding to the following general formula

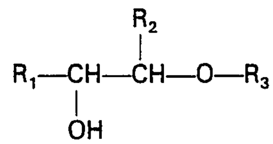 (I)

in which the radicals $R_1$ and $R_2$ represent hydrogen or alkyl radicals containing from 1 to 21 carbon atoms, at least one of these radicals being an alkyl radical and the sum of the carbon atoms in $R_1$ and $R_2$ amounting to between 6 and 22, and

$R_3$ represents a $C_1$—$C_8$-alkyl radical optionally substituted by 1 to 2 hydroxyl groups and/or interrupted by 1 to 2 ether bridges, and of reaction products of compounds of formula I with alkylene oxides, more particularly with ethylene oxide and/or propylene oxide, for the treatment of inorganic and organic pigments and fillers, the pigments and fillers being thoroughly mixed with the $\beta$-hydroxyalkyl ethers, which may be present as such, in solution or in suspension, in a quantity of from 0.05 to 5% by weight and preferably in a quantity of from 0.1 to 1% by weight, based on the substance to be treated, and any solvent or suspending agent present being distilled off from the mixture.

2. The use of reaction products of compounds of formula I with alkylene oxides as claimed in Claim 1, characterised in that the reaction products are addition products of ethylene oxide having a degree of alkoxylation of from 2 to 30 and preferably 5 to 18 moles of ethylene oxide per mole of $\beta$-hydroxyalkyl ether.